# EUROPÄISCHE PATENTANMELDUNG

(11) **EP 0 788 904 A2**
(43) Veröffentlichungstag der Anmeldung: **13.08.1997**
(21) Anmeldenummer: 96115595.9
(22) Anmeldetag: 27.09.1996
(51) Int. Cl.: B60H 1/00, B60H 1/26

(54) **Belüftungs-, Heizungs- und/oder Klimatisierungsvorrichtung für Fahrzeuge**

(30) Priorität: 29.09.1995 DE 19536419
(71) Anmelder: AURORA Konrad G. Schulz GmbH & Co, D-69427 Mudau (DE)
(72) Erfinder: Knühl, Wolfgang, 74722 Buchen-Hettingen (DE)
(74) Vertreter: Baronetzky, Klaus, Dipl.-Ing.

(57) **Zusammenfassung**

Eine Belüftungs-, Heizungs- und/oder Klimatisierungsvorrichtung für Fahrzeuge weist einen Umluftkanal und einen Frischluftkanal und evtl. ein Stellorgan auf, das das Verhältnis zwischen Umluft und Frischluft einstellt und im Strömungsweg vor einem Gebläse, insbesondere auch vor einem Wärmetauscher, angeordnet ist. Die Vorrichtung ist im oder auf dem Dach des Fahrzeugs angeordnet und der Frischluftkanal (20) weist eine sich aufrecht erstreckende Eintrittsöffnung (28), an die sich ein Erweiterungsraum (30) anschließt, und eine höhenversetzte und insbesondere gegen die Eintrittsöffnung (28) schräg stehende Austrittsöffnung (26) auf.

## Beschreibung

Die Erfindung betrifft eine Lüftungs-, Heizungs- und/oder Klimatisierungsvorrichtung für Fahrzeuge, gemäß dem Oberbegriff von Anspruch 1, insbesondere eine derartige Vorrichtung für den Einbau in das oder auf das Dach des Fahrzeugs.

Derartige Dachanlagen sind beispielsweise bei Kabinenfahrzeugen und beengten Raumverhältnissen erforderlich. Ein derartiger Dachlüfter ist beispielsweise aus der US-PS 3 524 398 bekannt. Dieser Dachlüfter weist einen Wärmetauscher auf, der wahlweise zur Kühlung oder zur Heizung der Fahrgastzelle eingesetzt werden kann.

Zwar ist es grundsätzlich wünschenswert, mit möglichst wenig konstruktivem Aufwand eine wahlweise Belüftung, Heizung und/oder Kühlung sicherzustellen, zumal auch leichtgewichtige Dachlüfter bevorzugt sind. Aus verschiedenen Gründen ist es jedoch ungünstig, den gleichen Wärmetauscher sowohl für Heizals auch für Kühlzwecke einzusetzen, zumal dann nicht ohne weiteres die übliche Sole in den als Verdampfer wirkenden Wärmetauscher eingespeist werden kann.

Ferner ist es vorgeschlagen worden, insbesondere für die Kühlung anstelle des reinen Frischluftbetriebs einen Umluftbetrieb zu sehen. Der Umluftbetrieb hat den Vorteil, daß erheblich weniger Kühlenergie bereitgestellt werden muß, nachdem ein geschlossener Luftkreislauf gegebenenfalls unter geringfügiger Frischluftbeimischung zur Verfügung steht. Die Umschaltung zwischen Frischluft und Umluft bedingt andererseits ein Stellorgan und entsprechende Luftführungswege, insbesondere nachdem regelmäßig zusätzlich zum Umluftbetrieb auch eine Heizung unter Verwendung von Frischluft erwünscht ist.

Bei der vorgeschlagenen Lösung ergeben sich vergleichsweise lange Strömungskanäle, was aus strömungstechnischer Sicht ungünstig ist und die erforderliche Gebläseleistung erhöht.

Demgegenüber liegt der Erfindung die Aufgabe zugrunde, eine Belüftungs-, Heizungs- und/oder Klimatisierungsvorrichtung für Fahrzeuge gemäß dem Oberbegriff von Anspruch 1 zu schaffen, die einen besonders guten Strömungswirkungsgrad erlaubt, ein geringes Gewicht insbesondere bei der Verwendung als Dachlüfter ermöglicht und im Einsatz vergleichsweise witterungsunabhängig ist.

Diese Aufgabe wird erfindungsgemäß durch Anspruch 1 gelöst. Vorteilhafte Weiterbildungen ergeben sich aus den Unteransprüchen.

Die überraschend einfachen erfindungsgemäßen Maßnahmen erlauben ohne zusätzlichen Aufwand einen Spritzwasser- und Regenschutz, so daß zusätzliche Schürzen entbehrlich sind und auch die häufig als unschön empfundenen schrägen Ansaugflächen, wie sie aus der US-PS 3 524 398 ersichtlich sind, vermieden werden können. Die erfindungsgemäße Lösung läßt sich ohne weiteres auch im Heckbereich des Kabinenfahrzeugs einsetzen, ohne daß die Frischluftzufuhr aufgrund von Staudruck oder Unterdruck in unerwünschter Weise beeinflußt würde. Zum einen weisen Kabinenfahrzeuge eher eine begrenzte Höchstgeschwindigkeit auf. Zum anderen ergibt die besondere Anordnung des erfindungsgemäßen Frischluftkanals seitlich angrenzend an den Umluftkanal eine Art Mitnahmeeffekt, nachdem auf der Saugseite des Gebläses ein Unterdruck besteht, den eine Luftströmung in den insbesondere als Verdampfer ausgebildeten Wärmetauscher hinein erzeugt. Dies ermöglicht insofern eine integrierte Außenluftansaugung.

Überraschend kann so mit ziemlich großen freien Strömungsquerschnitten gearbeitet werden, was eine entsprechend geringe Lüfterleistung ermöglicht und damit den erwünscht hohen Wirkungsgrad sicherstellt. Bei Verwendung eines Stellorgans kann der Strömungswiderstand des Frischluftkanals an die Erfordernisse angepaßt werden, so daß eine mehr oder weniger große Beimischung von Frischluft auch im Klimatisierungsbetrieb möglich ist. Alternativ kann das Stellorgan auch weggelassen werden, so daß beim Ansaugen eine stete Beimischung von Frischluft erfolgt. Bei der bevorzugten Ausführungsform ist der Strömungswiderstand des Umluftkanals geringer als der Strömungswiderstand des Frischluftkanals, so daß ohne Stellorgan hauptsächlich Umluft angesaugt wird. Beispielsweise besteht in vielen Fällen die Notwendigkeit, bei der Klimatisierung einen Frischluftanteil von 20 % beizumischen. Durch entsprechende Gestaltung der Strömungswiderstände kann dieses Verhältnis automatisch realisiert werden, wobei der Strömungswiderstand des Frischluftkanals durch das Filter erhöht wird.

Besonders günstig ist es ferner, daß der im wesentlichen dreieckförmige Umluftkanal einen immer gleichen Massenstrom pro betrachtetem Querschnitt erlaubt. Die ohne Trennwand im oberen Bereich entstehenden Wirbel werden so vermieden. Es versteht sich, daß bei Bedarf zur weiteren Wirbelreduzierung sich Luftleitbleche längs in dem Umluftkanal erstrecken können, die bevorzugt dann etwas gekrümmt sind.

Ferner ist es besonders günstig, daß die Eintrittsöffnung gegenüber der Austrittsöffnung höhenversetzt ist. Dies betrifft insbesondere die untere Kante der beiden Öffnungen zueinander, da sich durch den Höhenversatz die Vorteile eines Witterungsschutzes, etwa gegen eintretenden Regen, mit der Einstellung des Strömungswiderstandes gut verbinden lassen.

Überraschend läßt sich mit der erfindungsgemäßen Lösung mit der diagonalstehenden Trennwand zur Trennung zwischen Frischluft- und Umluftkanal ein ausgesprochen kompakter Aufbau mit guten Strömungseigenschaften erzielen. Die in die Eintrittsöffnung eintretende Luft findet zunächst einen Erweiterungsraum vor, der zur Strömungsberuhigung beiträgt. Im Bereich der Austrittsöffnung des Frischluftkanals ist die Frischluft dann bereits dem Verdampfer nahe benachbart.

Umgekehrt wird im reinen Umluftbetrieb durch die Schrägwand eine strömungstechnisch günstige Luftumlenkung zum Wärmetauscher hin erzielt, die mit einem ziemlich großen Strömungsquerschnitt und damit geringen Strömungsgeschwindigkeiten arbeitet. Die Umluft kann ohne weiteres unmittelbar aus dem Bereich unterhalb des Wärmetauschers angesaugt werden, wobei unmittelbar vor dem Wärmetauscher aufgrund des großen Strömungsquerschnitts geringe Strömungsgeschwindigkeiten herrschen, die dem verbesserten Wirkungsgrad des Wärmetauschers zugute kommen.

Ferner ist günstig, wenn erst die Austrittsöffnung des Frischluftkanals mit einem Filter versehen ist, das sich an den Erweiterungsraum anschließt. Die einströmende, staub- und gegegebenenfalls insektenführende Frischluft kann dann zunächst einer Strömungsberuhigung unterworfen werden, so daß der mitgeführte Staub Gelegenheit hat, sich abzusetzen. Auch in diesem Zusammenhang ist es besonders günstig, daß die Trennwand zwischen Umluftkanal und Frischluftkanal schrägstehend angeordnet ist, so daß der Staub leicht nach unten/außen rutscht und damit den Erweiterungsraum wieder verläßt.

Es versteht sich, daß wahlweise der Frischluftkanal durch eine an dem oberen, dem Verdampfer zugewandten Ende gelagerte Haube aufklappbar gehalten sein kann, wenn dies auf Gründen der Reinigung des Filters erforderlich sein sollte.

Weitere Einzelheiten, Vorteile und Merkmale ergeben sich aus der nachstehenden Beschreibung dreier Ausführungsbeispiele anhand der Zeichnung.

Es zeigen:
- Fig. 1: einen Schnitt durch eine erste Ausführungsform einer erfindungsgemäßen Belüftungs-, Heizungs- und/oder Klimatisierungsvorrichtung für Fahrzeuge;
- Fig. 2: einen Schnitt durch eine weitere Ausführungsform der Vorrichtung gemäß Fig. 1; und
- Fig. 3: einen Schnitt durch eine weitere Ausführungsform der Vorrichtung gemäß Fig. 1.

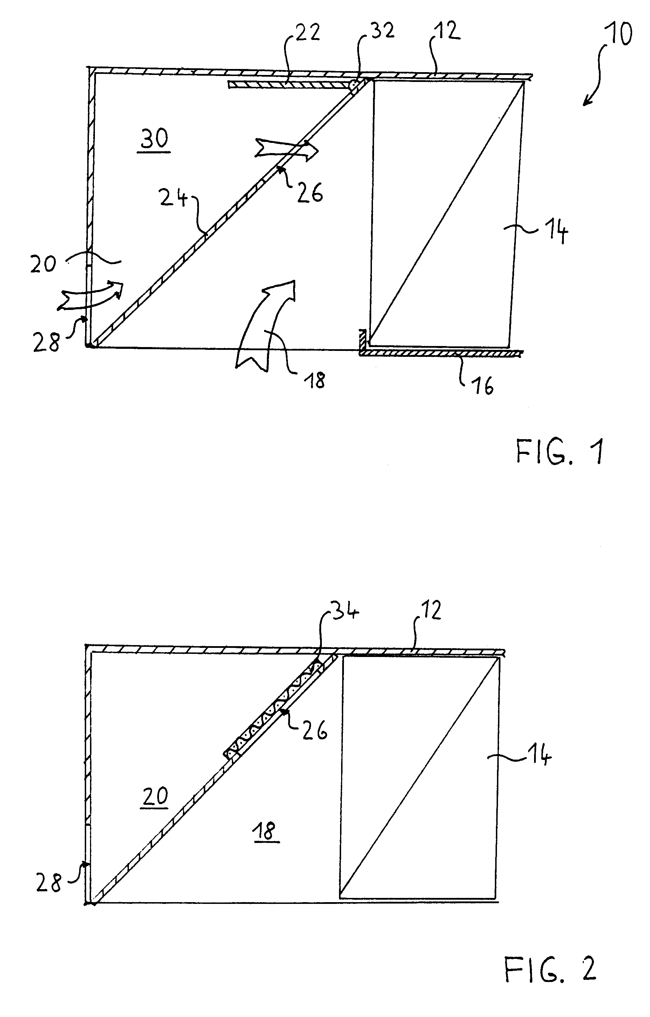

Die in Fig. 1 schematisch und teilweise dargestellte Belüftungs-, Heizungs- und/oder Klimatisierungsvorrichtung 10 ist auf oder im Dach 12 des hier nicht weiter dargestellten Fahrzeugs angeordnet. Sie weist einen Wärmetauscher 14 auf, der beispielsweise als Verdampfer ausgebildet ist und in einer Kondensatwasserwanne 16 ruht. Ein Gebläse schließt sich dem Wärmetauscher 14 an und ist hier nicht dargestellt.

Die Belüftungs-, Heizung- und/oder Klimatisierungsvorrichtung 10 weist ferner einen Umluftkanal 18 und einen Frischluftkanal 20 auf, der in ein Stellorgan 22 mündet, das in dem dargestellten Ausführungsbeispiel als Außenluftklappe ausgebildet ist. Die Außenluftklappe 22 ist an einer schrägstehenden Trennwand 24 oben angelenkt, die sich zwischen dem Frischluftkanal 20 und dem Umluftkanal 18 erstreckt, und dient zum wahlweisen Verschließen einer Austrittsöffnung 26 des Frischluftkanals 20.

Der Frischluftkanal 20 beginnt bei einer Eintrittsöffnung 28, an die sich ein Erweiterungsraum 30 anschließt. Der Erweiterungsraum 30 erstreckt sich im wesentlichen über die Breite der Kabine oder des Fahrzeugs und weist - wie aus Fig. 1 ersichtlich ist - einen Querschnitt eines gleichschenkligen, rechtwinkligen Dreiecks auf. Bezogen aus dieses Dreieck ist die Erweiterungsöffnung an dem hypotenusenseitigen Ende einer Kathete angeordnet, während die Austrittsöffnung 26 in der Hypotenuse, jedoch der anderen Kathete benachbart vorgesehen ist. Ein Schwenklager 32 ist oberhalb der Austrittsöffnung 26 vorgesehen.

Wie aus Fig. 1 ersichtlich ist, erlaubt diese Ausführungsform ein verschwenkbares Stellorgan 22 über einen Winkel von etwas mehr als 45°. In der Schließstellung liegt das Stellorgan 22 auf der Trennwand 24, die die Hypotenuse bildet, auf, und überlappt damit die Austrittsöffnung 26. Bei dieser Ausgestaltung ist es vorgesehen, kein zusätzliches Filter im Frischluftkanal 20 anzuordnen, obwohl dies im Grunde möglich ist.

Wie aus Fig. 1 ersichtlich ist, ist die Eintrittsöffnung 28 gegenüber der Austrittsöffnung 26 höhenversetzt und weist eine andere Ausrichtung auf. Durch die andere Ausrichtung wird zudem der Strömungswiderstand herabgesetzt, nachdem trotz Höhenversatz die Luftumlenkung dann praktisch nur einfach erfolgen muß und zudem bei geringer Strömungsgeschwindigkeit vorliegt, was sich aus dem großen Querschnitt des Erweiterungsraums 30 ergibt.

Ebenfalls einen sehr großen Strömungsquerschnitt weist der Umluftkanal 18 auf. Er schließt sich mit seiner Eintrittsöffnung, beispielsweise über ein hier nicht dargestelltes Gitter, unmittelbar an den Innenraum an, wobei es sich versteht, daß der Umluftkanal 18 bei Bedarf ebenfalls Eintrittsöffnungen aufweisen kann, die verschließbar sind, so daß ein reiner Frischluftbetrieb möglich wäre. Obwohl in der Darstellung gemäß Fig. 1 das Stellorgan 22 so angeordnet ist, daß der Frischluftkanal an dem Stellorgan mündet, ist es auch möglich, anstelle dessen praktisch den Umluftkanal mit Stellorganen zu versehen, die dann unmittelbar im Zugriff des Fahrers des Kabinenfahrzeugs liegen, um hierdurch das Verhältnis zwischen Frischluft und Umluft einzustellen.

Eine derartige Lösung ist aus Fig. 2 schematisch ersichtlich. Hier sind die gleichen Teile mit gleichen Bezugszeichen wie in Fig. 1 bezeichnet und bedürfen daher keiner weiteren Erläuterung. Der Umluftkanal 18 erstreckt sich ebenfalls mit einem im wesentlichen dreieckigen Querschnitt, so daß Umluftkanal und Frischluftkanal 18 und 20 zusammen einen rechteckigen Querschnitt aufweisen und damit der erforderliche Raum für die Luftzuführung auf einen ausgesprochen kompakt bauenden Quader beschränkt ist.

Bei dieser Lösung ist das Stellorgan 22 durch ein Außenluftfilter 34 ersetzt. Es ist ein vergleichsweise großer Strömungswiderstand vorgesehen, und die Einstellung des Verhältnisses zwischen Frischluft und Umluft folgt nach Belieben durch Stellorgane, die am Eintritt des Umluftkanals 18 vorgesehen sind. Bei dieser Lösung ist dann bei geöffneten Stellorganen am Umluftkanal der Strömungswiderstand durch das Außenluftfilter 34 so groß, daß lediglich die gewünschte Menge Frischluft angesaugt wird.

Es versteht sich, daß bei Bedarf auch beide Ausführungsformen kombinierbar sind, so daß der Außenluftfilter 34 zusätzlich durch das Stellorgan 22 abdeckbar ist.

Die aufrechte Eintrittsöffnung 28 erlaubt eine übliche Bauweise des Fahrzeugs, insbesondere des Kabinenfahrzeugs. Es versteht sich, daß gewünschtenfalls die rechtwinklige Ecke des dreieckigen Frischluftkanals 20 auch mit einer Fase oder einem Radius versehen sein kann, um die Außenkonturen des Kabinenfahrzeugs weniger eckig wirken zu lassen.

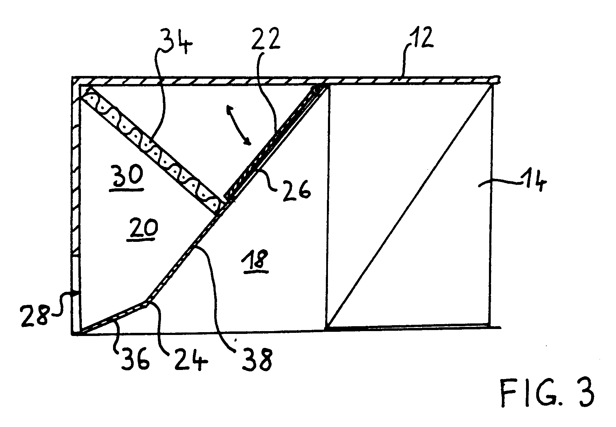

Die in Fig. 3 dargestellte Lösung zeigt eine andere Anordnung des Filters 34. Bei dieser Anordnung erstreckt sich das Filter im Frischluftkanal 20 quer durch den Erweiterungsraum 30, und zwar im Bereich des maximalen Strömungsquerschnitts. Diese Anordnung hat den Vorteil, daß die Luftgeschwindigkeit im Filter minimal ist, so daß auch der Strömungswiderstand minimiert wird.

Ferner ist bei der Ausgestaltung gemäß Fig. 3 die Trennwand 24 nicht gerade, sondern etwas abgeknickt, wobei sich ein unterer Schenkel 36 flacher und ein oberer Schenkel 38 steiler erstreckt. Diese Ausgestaltung hat den Vorteil eines verminderten Strömungswiderstands anschließend an die Eintrittsöffnung 28, nachdem dann dort eine sehr sanfte Umlenkung vorgenommen wird. Allerdings ist der Strömungswiderstand des Umluftkanals 18 bei dieser Ausgestaltung etwas größer, wobei es sich versteht, daß durch die Lage und Ausgestaltung der Trennwand 24 die Strömungswiderstände und ihr Verhältnis zueinander sich in weiten Bereichen an die Erfordernisse anpassen lassen.

Gemäß einer weiteren bevorzugten Ausgestaltung ist es vorgesehen, Trennwände unterschiedlicher Steigungen austauschbar für die erfindungsgemäße Belüftungs-, Heizungs- und/oder Klimatisierungsvorrichtung zu lagern, so daß je nach Kundenwunsch und Bedarfsprofil eine Anpassung der relativen Strömungswiderstände im Hinblick auf entweder den Schwerpunkt Frischluftbetrieb/Heizung oder den Schwerpunkt Umluftbetrieb/Klimatisierung vorgenommen werden kann.

Gemäß einer besonders bevorzugten Ausgestaltung ist es ferner vorgesehen, die erfindungsgemäße Belüftungs-, Heizungs- und/oder Klimatisierungsvorrichtung 10 hinten an einem Fahrzeug, wie beispielsweise einem Bus, vorzusehen. Anschließend an das hintere Ende des Dachs ergibt sich zwar grundsätzlich eine Unterdruckzone, so daß die Anordnung der Eintrittsöffnung 28 dort ungünstig wäre. An bestimmten Stellen wird der Unterdruck jedoch durch Wirbel kompensiert, so daß ein normaler statischer Druck vorliegt. Es ist bevorzugt, die Frischluftöffnung 28 dann an dieser Stelle anzuordnen.

## Patentansprüche

1. Belüftungs-, Heizungs- und/oder Klimatisierungsvorrichtung für Fahrzeuge, mit einem Umluftkanal und einem Frischluftkanal, und insbesondere einem Stellorgan, das das Verhältnis zwischen Umluft und Frischluft einstellt und im Strömungsweg vor einem Gebläse, insbesondere auch vor einem Wärmetauscher, angeordnet ist, wobei die Vorrichtung insbesondere im oder auf dem Dach des Fahrzeugs angeordnet ist, dadurch gekennzeichnet, daß der Frischluftkanal (20) eine sich aufrecht oder schräg aufwärts erstreckende Eintrittsöffnung (28), an die sich ein Erweiterungsraum (30) anschließt, und eine höhenversetzte und insbesondere gegen die Eintrittsöffnung (28) schräg stehende Austrittsöffnung (26) aufweist.

2. Belüftungs-, Heizungs- und/oder Klimatisierungsvorrichtung nach Anspruch 1, dadurch gekennzeichnet, daß der Erweiterungsraum (30) einen im wesentlichen dreieckigen Querschnitt aufweist, wobei die Eintrittsöffnung (28) in einer Kathete und die Austrittsöffnung (26) in der Hypotenuse des Dreiecks angeordnet ist.

3. Belüftungs-, Heizungs- und/oder Klimatisierungsvorrichtung nach Anspruch 1 oder 2, dadurch gekennzeichnet, daß der Umluftkanal (18) einen Raum mit annähernd oder im wesentlichen dreieckigem Querschnitt aufweist, dessen Hypotenuse die Austrittsöffnung des Frischluftkanals (20) aufweist.

4. Belüftungs-, Heizungs- und/oder Klimatisierungsvorrichtung nach einem der vorhergehenden Ansprüche, dadurch gekennzeichnet, daß der Umluftkanal (18) an einem Verdampfer (14) mündet und daß eine Seitenwand (24) des Umluftkanals (18) schräg auf den Verdampfer (14) zuläuft.

5. Belüftungs-, Heizungs- und/oder Klimatisierungsvorrichtung nach einem der vorhergehenden Ansprüche, dadurch gekennzeichnet, daß Frischluftkanal (20) und Umluftkanal (18) in einem im wesentlichen quaderförmigen Raum angeordnet und durch eine Diagonalwand (24) voneinander getrennt sind, die eine Austrittsöffnung (26) für den Frischluftkanal (20) benachbart dem im Strömungsweg hinteren Ende aufweist, wobei insbesondere Frisch- und Umluftkanal eine ungleiche Länge aufweisen.

6. Belüftungs-, Heizungs- und/oder Klimatisierungsvorrichtung nach einem der vorhergehenden Ansprüche, dadurch gekennzeichnet, daß die Austrittsöffnung (26) des Frischluftkanals (20) von dem Stellorgan (22) wahlweise abdeckbar ist.

7. Belüftungs-, Heizungs- und/oder Klimatisierungsvorrichtung nach einem der vorhergehenden Ansprüche, dadurch gekennzeichnet, daß das Stellorgan (22) als Schwenkklappe oder Schiebeklappe ausgebildet ist, das zwischen einer im wesentlichen zum Dach (12) des Fahrzeugs parallelen Offenstellung und einer auf der Diagonalwand (24) aufliegenden Schließstellung im Winkel von etwa 45° verschwenkbar ist.

8. Belüftungs-, Heizungs- und/oder Klimatisierungsvorrichtung nach einem der vorhergehenden Ansprüche, dadurch gekennzeichnet, daß die Austrittsöffnung (26) von einem Filter (34) abgedeckt ist, das insbesondere schrägstehend im wesentlichen diagonal den Erweiterungsraum (30) durchsetzend angeordnet ist.

9. Belüftungs-, Heizungs- und/oder Klimatisierungsvorrichtung nach einem der vorhergehenden Ansprüche, dadurch gekennzeichnet, daß der Querschnitt der Austrittsöffnung (26) des Frischluftkanals (20) größer als der Querschnitt der Eintrittsöffnung (28) des Frischluftkanals (20) ist.

10. Belüftungs-, Heizungs- und/oder Klimatisierungsvorrichtung nach einem der vorhergehenden Ansprüche, dadurch gekennzeichnet, daß die Austrittsöffnung (26) des Frischluftkanals (20) um etwa die doppelte Höhe der Eintrittsöffnung (28) gegenüber dieser höhenversetzt ist.
